(19) **Europäisches Patentamt / European Patent Office / Office européen des brevets**

(11) **EP 4 607 819 A1**

(12) **EUROPEAN PATENT APPLICATION**
published in accordance with Art. 153(4) EPC

(43) Date of publication:
**27.08.2025 Bulletin 2025/35**

(21) Application number: **22965404.1**

(22) Date of filing: **14.11.2022**

(51) International Patent Classification (IPC):
**H04B 10/00** *(2013.01)*

(52) Cooperative Patent Classification (CPC):
**H04B 10/00**

(86) International application number:
**PCT/CN2022/131694**

(87) International publication number:
**WO 2024/103211 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **ZOU, Kai**
  **Shenzhen, Guangdong 518129 (CN)**
• **YANG, Yong**
  **Shenzhen, Guangdong 518129 (CN)**
• **MA, Yu**
  **Shenzhen, Guangdong 518129 (CN)**
• **GUO, Ting**
  **Shenzhen, Guangdong 518129 (CN)**
• **ZHANG, Huawei**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND APPARATUS**

(57) A communication method and apparatus are provided, to reduce device costs and power consumption, and improve accuracy of nonlinear distortion of receiving and transmitting of a communication system. The communication method includes: A sending device sends a first carrier signal to a receiving device; the sending device obtains a digital pre-distortion DPD coefficient fed back by the receiving device, where the DPD coefficient is determined by the receiving device based on the received first carrier signal; the sending device performs, based on the DPD coefficient, digital pre-distortion processing on a multi-carrier signal to be sent, to generate a nonlinear pre-distortion signal, and generates a second carrier signal based on the nonlinear pre-distortion signal, where the signal to be sent is loaded with a baseband signal; and the sending device transmits the second carrier signal to the receiving device.

Sending device — Receiving device

S301: First carrier signal

S302: Calculate a DPD coefficient based on the first carrier signal

S303: DPD coefficient

S304: Perform, based on the DPD coefficient, digital pre-distortion processing on a multi-carrier signal to be sent, to generate a nonlinear pre-distortion signal, and generate a second carrier signal based on the nonlinear pre-distortion signal

S305: Second carrier signal

FIG. 3

**Description**

TECHNICAL FIELD

This application relates to the field of wireless communication technologies, and in particular, to a communication method and apparatus.

BACKGROUND

With continuous development of networks, mobile bearers have ever-changing demands on a microwave bandwidth, and requirements on a microwave transmission bandwidth are increasingly high. In a related technology, based on single-device carrier aggregation (carrier aggregation, CA), a non-contiguous frequency spectrum may be used to cope with rapid bandwidth growth.

To reduce device costs, a single-device CA module needs to allow a plurality of subcarriers to pass through a same radio frequency channel. However, when carriers in a plurality of frequency bands pass through a same power amplifier (power amplifier, PA), inter-carrier inter-modulation distortion (inter-modulation distortion, IMD) may occur. Usually, a digital pre-distortion (digital pre-distortion, DPD) device is used to compensate for nonlinear distortion.

A common manner used by the DPD device to compensate for distortion is that carriers in a plurality of frequency bands pass through a PA, then pass through an independent feedback circuit, and couple a nonlinear distortion signal to calculate a DPD coefficient. In this manner, extra hardware costs and device power consumption are increased. In addition, a feedback channel at a local end cannot reflect nonlinearity of an entire transmitting and receiving link, and compensation for nonlinear distortion of a communication system is not accurate enough.

SUMMARY

Embodiments of this application provide a communication method and apparatus, to reduce device costs and power consumption, and improve accuracy of compensating for nonlinear distortion of a communication system.

According to a first aspect, a communication method is provided. The method includes the following process: A sending device sends a first carrier signal to a receiving device; the sending device obtains a digital pre-distortion DPD coefficient fed back by the receiving device, where the DPD coefficient is determined by the receiving device based on the received first carrier signal; the sending device performs, based on the DPD coefficient, digital pre-distortion processing on a multi-carrier signal to be sent, to generate a nonlinear pre-distortion signal, and generates a second carrier signal based on the nonlinear pre-distortion signal, where the signal to be sent is loaded with a baseband signal; and the sending device transmits the second carrier signal to the receiving device.

In the method, the receiving device determines the DPD coefficient based on the first carrier signal sent by the sending device, and feeds back the DPD coefficient to the sending device. The sending device compensates for, based on the DPD coefficient fed back by the receiving device, nonlinear distortion of the multi-carrier signal to be sent, then generates the second carrier signal, and sends the second carrier signal to the receiving device. As the first carrier signal is sent to the receiving device through a channel, the DPD coefficient determined by the receiving device based on the first carrier signal can accurately reflect a current nonlinear distortion state of a link between the sending device and the receiving device. Therefore, the nonlinear distortion of the signal to be sent is compensated for based on the DPD coefficient that is determined based on the first carrier signal, so that accuracy of compensating for the nonlinear distortion of the signal to be sent can be improved.

In addition, in this method, because the DPD coefficient is determined by the receiving device, and does not need to be calculated by relying on an independent feedback circuit in the sending device, the independent feedback circuit in the sending device may be omitted, to reduce hardware costs and power consumption.

In a possible implementation, when generating the second carrier signal based on the nonlinear pre-distortion signal, the sending device may perform power amplification on the nonlinear pre-distortion signal to output the second carrier signal, where nonlinear components of the nonlinear pre-distortion signal and the second carrier signal have a same amplitude and opposite phases. Generally, in a power amplification process, an amplitude and a phase of a signal are nonlinearly distorted. Nonlinear components of a nonlinear pre-distortion signal generated based on DPD coefficient processing and a second carrier signal have a same amplitude and opposite phases, so that nonlinear distortion in the power amplification process can be compensated for, and the generated second carrier signal is improved to a linear signal.

In a possible implementation, the sending device may further obtain a plurality of subcarrier signals, and perform carrier combination on the plurality of subcarrier signals to generate a multi-carrier signal to be sent. In this implementation, the plurality of subcarrier signals are combined into one carrier signal, so that digital pre-distortion processing can be performed on a multi-carrier signal generated through the carrier combination, to improve accuracy of compensating for nonlinear distortion.

In a possible implementation, when obtaining the plurality of subcarrier signals, the sending device may process a baseband signal to be sent, to generate the plurality of subcarrier signals. The sending device may further perform carrier-level processing on the plurality of subcarrier signals. When performing carrier combination on the plurality of subcarrier signals, the sending device may perform carrier combination on the plurality of subcarrier signals obtained through the carrier-level processing. In this implementation, through baseband processing and carrier-level processing, an anti-interference capability of a carrier signal transmitted by an antenna can be enhanced, and communication accuracy can be improved.

In a possible implementation, when performing, based on the DPD coefficient, digital pre-distortion processing on the multi-carrier signal to be sent, to generate the nonlinear pre-distortion signal, the sending device may perform, based on the DPD coefficient, digital pre-distortion processing on the multi-carrier signal to be sent, to generate a nonlinear pre-distortion signal in a digital signal form, and convert the nonlinear pre-distortion signal in the digital signal form into the nonlinear pre-distortion signal in an analog signal form. When performing power amplification on the nonlinear pre-distortion signal, the sending device may perform power amplification on the nonlinear pre-distortion signal in the analog signal form. In some communication scenarios, a signal transmitted in a communication system is an analog signal, and correspondingly, a carrier signal transmitted by an antenna is also a signal in the analog signal form. Therefore, in this implementation, a discrete digital signal is converted into a continuously changing analog signal, so that requirements of various communication scenarios can be met.

In a possible implementation, after the sending device performs, based on the DPD coefficient, digital pre-distortion processing on the multi-carrier signal to be sent, to generate the nonlinear pre-distortion signal, the sending device may further perform up-conversion on the nonlinear pre-distortion signal. When performing power amplification on the nonlinear pre-distortion signal, the sending device may perform power amplification on the nonlinear pre-distortion signal obtained through the up-conversion. In this implementation, a frequency of the nonlinear pre-distortion signal is modulated to a frequency of a carrier signal, so that different use requirements for air interface carrier frequencies can be met.

According to a second aspect, a communication method is provided. The method includes the following process: A receiving device receives a first carrier signal sent by a sending device; the receiving device calculates a DPD coefficient based on the first carrier signal; the receiving device sends the DPD coefficient to the sending device; the receiving device receives a second carrier signal sent by the sending device, where the second carrier signal is generated by the sending device based on a nonlinear pre-distortion signal that is generated by performing, based on the DPD coefficient, digital pre-distortion processing on a multi-carrier signal to be sent.

In the method, the receiving device calculates the DPD coefficient by using the received first carrier signal. The DPD coefficient can accurately reflect a current nonlinear distortion state of a link between the sending device and the receiving device. Therefore, the nonlinear distortion of the signal to be sent is compensated for based on the DPD coefficient that is determined based on the first carrier signal, so that accuracy of compensating for the nonlinear distortion of the signal to be sent can be improved. In addition, the receiving device dynamically calculates the DPD coefficient based on the received carrier signal, so that the receiving device can cope with changes in scenarios such as high and low temperatures, device aging, and a frequency change, to improve performance and increase applicable scenarios of nonlinear compensation.

In a possible implementation, the receiving device may further decide the first carrier signal, to obtain a decision signal of the first carrier signal. When calculating the DPD coefficient based on the first carrier signal, the receiving device may calculate the DPD coefficient based on the first carrier signal and the decision signal. The decision signal may be considered as a signal with a minimum error from the baseband signal, or a signal that is not affected by a nonlinear distortion state, or is less affected by the nonlinear distortion state. However, a carrier signal is a signal affected by the nonlinear distortion state. Therefore, the nonlinear distortion state may be determined by using the carrier signal and the decision signal. In other words, the DPD coefficient calculated by using the carrier signal and the decision signal can reflect the nonlinear distortion state, so that the sending device can improve nonlinear compensation performance based on the DPD coefficient fed back by the receiving device.

In a possible implementation, the first carrier signal may include a plurality of subcarrier signals, and the decision signal may include a decision signal corresponding to each subcarrier signal.

For example, when calculating the DPD coefficient based on the first carrier signal and the decision signal, the receiving device may calculate the DPD coefficient based on each subcarrier signal, a decision output signal corresponding to each subcarrier signal, and the following formula:

$$c(t+1) = c(t) + \mu * \sum_{i}^{N-1} x_i^*(t) * \exp(-j2\pi f_i t) * \sum_{i}^{N-1} (x_i(t) - y_i(t)) * \exp(j2\pi f_i t)$$,

where $c(t+1)$ is the DPD coefficient, $c(t)$ is a DPD coefficient obtained through a previous time of calculation, $x_i$ represents an ith subcarrier signal in the first carrier signal, N represents a quantity of subcarrier signals included in the first carrier

signal, $y_i$ is a decision signal corresponding to the ith subcarrier signal, $f_i$ is a carrier frequency of the ith subcarrier, and $\mu$ is a constant. In this implementation, the DPD coefficient calculated based on a carrier signal and the decision signal can reflect a real nonlinear distortion state. Therefore, the sending device compensates for, based on the DPD coefficient fed back by the receiving device, a signal to be sent, so that nonlinear compensation performance of the signal to be sent can be improved. In addition, an accurate manner of calculating the DPD coefficient based on the carrier signal and the decision signal is provided.

In a possible implementation, after receiving the first carrier signal sent by the sending device, the receiving device may further separate the first carrier signal into a plurality of subcarrier signals, and respectively perform carrier-level processing on the plurality of subcarrier signals. When calculating the DPD coefficient based on the first carrier signal, the receiving device may calculate the DPD coefficient based on the plurality of subcarrier signals obtained through the carrier-level processing. If the sending device of the carrier signal performs carrier combination on the plurality of subcarriers, correspondingly, the receiving device of the carrier signal separates and processes the carrier signal, so that accuracy of processing the carrier signal can be improved, to improve accuracy of calculating the DPD coefficient.

In a possible implementation, when receiving the first carrier signal sent by the sending device, the receiving device may receive the first carrier signal in an analog signal form, and convert the first carrier signal in the analog signal form into the first carrier signal in a digital signal form. When calculating the DPD coefficient based on the first carrier signal, the receiving device may calculate the DPD coefficient based on the first carrier signal in the digital signal form. In some communication scenarios, a signal transmitted in a communication system is an analog signal, and correspondingly, a carrier signal transmitted by an antenna is also a signal in the analog signal form. Therefore, in this implementation, the receiving device converts a received and continuously changing analog signal into a discrete digital signal. This helps improve accuracy of subsequent DPD coefficient calculation.

In a possible implementation, after receiving the first carrier signal sent by the sending device, the receiving device may further perform down-conversion on the first carrier signal. When calculating the DPD coefficient based on the first carrier signal, the receiving device may calculate the DPD coefficient based on the first carrier signal obtained through the down-conversion. In this implementation, the receiving device may reduce or remove a frequency of the carrier signal.

According to a third aspect, an embodiment of this application provides a communication apparatus, including a digital pre-distortion DPD module, a power amplifier, and an antenna. The power amplifier is separately connected to the DPD module and the antenna. The antenna may be configured to send a first carrier signal to a receiving device, and obtain a DPD coefficient fed back by the receiving device, where the DPD coefficient is determined by the receiving device based on the received first carrier signal. The DPD module may be configured to perform, based on the DPD coefficient, digital pre-distortion processing on a multi-carrier signal to be sent, to generate a nonlinear pre-distortion signal, where the multi-carrier signal to be sent is loaded with a baseband signal. The power amplifier may be configured to generate a second carrier signal based on the nonlinear pre-distortion signal. The antenna may be further configured to transmit the second carrier signal to the receiving device.

In a possible implementation, the power amplifier may be specifically configured to perform power amplification on the nonlinear pre-distortion signal, to output the second carrier signal, where nonlinear components of the nonlinear pre-distortion signal and the carrier signal have a same amplitude and opposite phases.

In a possible implementation, the communication apparatus may further include a carrier combination module. The carrier combination module is connected to the DPD module. The carrier combination module may be configured to perform carrier combination on a plurality of subcarrier signals to generate the multi-carrier signal to be sent. In this implementation, the plurality of subcarrier signals are combined into one carrier signal, and nonlinear pre-distortion signals output by the DPD module may share one power amplifier. An output port of the power amplifier does not need to be connected to an independent nonlinear feedback circuit, but the antenna is used for transmission, so that hardware costs and power consumption can be reduced.

In a possible implementation, the communication apparatus may further include a baseband processing module and a carrier-level processing module. The carrier-level processing module is separately connected to the baseband processing module and the carrier combination module. A quantity of carrier-level processing modules is the same as a quantity of the plurality of subcarrier signals. The baseband processing module may be configured to process a baseband signal to be sent, to generate the plurality of subcarrier signals. The carrier-level processing module may be configured to perform carrier-level processing on one of the plurality of subcarrier signals. The carrier combination module may be specifically configured to perform carrier combination on the plurality of subcarrier signals obtained through the carrier-level processing, to generate the multi-carrier signal. In this implementation, modulation of the baseband signal and rate adjustment and frequency adjustment of the plurality of subcarrier signals can be implemented through baseband processing and carrier-level processing, to enhance an anti-interference capability of a carrier signal transmitted by the antenna, and improve communication accuracy.

In a possible implementation, a baseband processing module and a carrier-level processing module may be connected through an intermediate frequency cable or an optical fiber. In this case, the baseband processing module and the carrier-level processing module may be respectively deployed at different locations. When the two modules deployed at different locations are connected through the intermediate frequency cable or the optical fiber, a communication process is subject to less interference, and communication accuracy can be improved.

In a possible implementation, the communication apparatus may further include a digital-to-analog converter DAC. The DAC is separately connected to the DPD module and the power amplifier. The DPD module may be specifically configured to perform, based on the DPD coefficient, digital pre-distortion processing on the multi-carrier signal to be sent, to generate the nonlinear pre-distortion signal in a digital signal form. The DAC may be configured to convert the nonlinear pre-distortion signal in the digital signal form into the nonlinear pre-distortion signal in an analog signal form. The power amplifier may be specifically configured to perform power amplification on the nonlinear pre-distortion signal in the analog signal form. Optionally, the DAC is connected to the power amplifier through an intermediate frequency cable or an optical fiber.

In a possible implementation, the communication apparatus may further include an up-converter. The up-converter is separately connected to the DPD module and the power amplifier. The up-converter may be configured to perform up-conversion on the nonlinear pre-distortion signal. The power amplifier may be specifically configured to perform power amplification on the nonlinear pre-distortion signal obtained through the up-conversion.

According to a fourth aspect, an embodiment of this application provides a communication apparatus, including an antenna, a DPD coefficient calculation module, and a DPD coefficient backhaul module. The antenna may be configured to receive a first carrier signal sent by a sending device. The DPD coefficient calculation module may be configured to calculate a DPD coefficient based on a carrier signal. The DPD coefficient backhaul module may be configured to send the DPD coefficient to the antenna. The antenna may be further configured to send the DPD coefficient to the sending device, and receive a second carrier signal sent by the sending device, where the second carrier signal is generated by the sending device based on a nonlinear pre-distortion signal that is generated by performing, based on the DPD coefficient, digital pre-distortion processing on a multi-carrier signal to be sent.

In a possible implementation, the communication apparatus may further include a decider. The decider is separately connected to the antenna and the DPD coefficient calculation module. The decider may be configured to decide the first carrier signal to obtain a decision signal of the first carrier signal. The DPD coefficient calculation module may be specifically configured to calculate the DPD coefficient based on the first carrier signal and the decision signal.

In a possible implementation, the first carrier signal may include a plurality of subcarrier signals, the decision signal may include a decision signal corresponding to each subcarrier signal, and a quantity of deciders may be the same as a quantity of the plurality of subcarrier signals.

For example, the DPD coefficient calculation module may be specifically configured to calculate the DPD coefficient based on each subcarrier signal, the decision signal corresponding to each subcarrier signal, and the following formula:

$$c(t+1) = c(t) + \mu * \sum_i^{N-1} x_i^*(t) * \exp(-j2\pi f_i t) * \sum_i^{N-1}(x_i(t) - y_i(t)) * \exp(j2\pi f_i t),$$

where $c(t+1)$ is the DPD coefficient obtained through calculation, $c(t)$ is a DPD coefficient obtained through a previous time of calculation, $x_i$ represents an ith subcarrier signal in the first carrier signal, N represents a quantity of subcarrier signals included in the first carrier signal, $y_i$ is a decision signal corresponding to the ith subcarrier signal, $f_i$ is a carrier frequency of the ith subcarrier, and $\mu$ is a constant.

In a possible implementation, the communication apparatus may further include a carrier separation module and a carrier-level processing module. The carrier-level processing module is separately connected to the carrier separation module and the DPD coefficient calculation module. The carrier separation module is configured to separate the first carrier signal into a plurality of subcarrier signals. The carrier-level processing module may be configured to perform carrier-level processing on one of the plurality of subcarrier signals. A quantity of carrier-level processing modules is the same as a quantity of the plurality of subcarrier signals. The DPD coefficient calculation module may be specifically configured to calculate the DPD coefficient based on the plurality of subcarrier signals obtained through the carrier-level processing.

In a possible implementation, the communication apparatus may further include an analog-to-digital converter ADC. The ADC is separately connected to the antenna and the DPD coefficient calculation module. The antenna may be specifically configured to receive the first carrier signal in an analog signal form. The ADC may be configured to convert the first carrier signal in the analog signal form into the first carrier signal in a digital signal form. The DPD coefficient calculation module may be specifically configured to calculate the DPD coefficient based on the first carrier signal in the digital signal form.

In a possible implementation, the communication apparatus may further include a down-converter. The down-converter is separately connected to the antenna and the DPD coefficient calculation module. The down-converter may be configured to perform down-conversion on the first carrier signal. The DPD coefficient calculation module may be specifically configured to calculate the DPD coefficient based on the first carrier signal obtained through the down-conversion.

In a possible implementation, a carrier-level processing module and the DPD coefficient calculation module may be connected through an intermediate frequency cable or an optical fiber. In this case, the carrier-level processing module and the DPD coefficient calculation module may be respectively deployed at different locations. When the two modules deployed at different locations are connected through the intermediate frequency cable or the optical fiber, a communication process is subject to less interference, and communication accuracy can be improved.

In a possible implementation, a down-converter and the DPD coefficient calculation module may be connected through an intermediate frequency cable or an optical fiber. In this case, the carrier-level processing module and the DPD coefficient calculation module may be respectively deployed at different locations. When the two modules deployed at different locations are connected through the intermediate frequency cable or the optical fiber, a communication process is subject to less interference, and communication accuracy can be improved.

According to a fifth aspect, an embodiment of this application provides a communication apparatus. The communication apparatus may implement the method in any one of the first aspect, the second aspect, and the possible implementations of the first aspect and the second aspect. These functions may be implemented by hardware, or may be implemented by hardware by executing corresponding software. The hardware or the software includes one or more functional modules corresponding to the foregoing functions.

According to a sixth aspect, a communication apparatus is provided. The communication apparatus includes a transceiver and a processor. Optionally, the communication apparatus further includes a memory. The memory is configured to store a computer program or instructions. The processor is separately coupled to the memory and the transceiver. When the processor executes the computer program or the instructions, the communication apparatus is enabled to perform the method in any one of the first aspect, the second aspect, and the possible implementations of the first aspect and the second aspect.

According to a seventh aspect, a computer program product is provided. The computer program product includes computer program code. When the computer program code is run on a computer, the computer is enabled to perform the method in any one of the first aspect, the second aspect, and the possible implementations of the first aspect and the second aspect.

According to an eighth aspect, this application provides a chip system. The chip system includes a processor and a memory. The processor and the memory are electrically coupled. The memory is configured to store computer program instructions. The processor is configured to execute some or all of the computer program instructions in the memory. When the some or all of the computer program instructions are executed, a function in any one of the first aspect, the second aspect, and the possible implementations of the first aspect and the second aspect is implemented.

In a possible design, the chip system further includes a transceiver. The transceiver is configured to send a signal processed by the processor, or receive a signal and input the signal to the processor. The chip system may include a chip, or may include a chip and another discrete component.

According to a ninth aspect, a computer-readable storage medium is provided. The computer-readable storage medium stores a computer program. When the computer program is run, the method in any one of the first aspect, the second aspect, and the possible implementations of the first aspect and the second aspect is implemented.

According to a tenth aspect, this application provides a communication system, including the communication apparatus in any one of the third aspect and the possible implementations of the third aspect, and the communication apparatus in any one of the fourth aspect and the possible implementations of the fourth aspect.

For technical effects brought by any one of the implementations of the third aspect to the tenth aspect, refer to technical effects brought by the first aspect and the second aspect. Details are not described herein again.

BRIEF DESCRIPTION OF DRAWINGS

FIG. 1 is a diagram of a microwave network architecture according to an embodiment of this application;
FIG. 2 is a diagram of a microwave network architecture according to an embodiment of this application;
FIG. 3 is a flowchart of a communication method according to an embodiment of this application;
FIG. 4 is a diagram of a structure of a communication apparatus according to an embodiment of this application;
FIG. 5 is a diagram of a structure of a communication apparatus according to an embodiment of this application;
FIG. 6 is a diagram of a structure of a communication apparatus according to an embodiment of this application;
FIG. 7 is a diagram of a structure of a communication apparatus according to an embodiment of this application;
FIG. 8 is a diagram of a structure of a communication apparatus according to an embodiment of this application;
FIG. 9 is a diagram of a structure of a communication apparatus according to an embodiment of this application;

FIG. 10 is a diagram of a structure of a communication apparatus according to an embodiment of this application; and

FIG. 11 is a diagram of a structure of a communication apparatus according to an embodiment of this application.

## DESCRIPTION OF EMBODIMENTS

The following further describes in detail embodiments of this application with reference to the accompanying drawings.

All aspects, embodiments, or features are presented in this application by describing a system that may include a plurality of devices, components, and modules, and the like. It should be understood and appreciated that, each system may include another device, component, and module, and the like, and/or may not include all devices, components, and modules, and the like discussed with reference to the accompanying drawings. In addition, a combination of these solutions may be used.

In addition, the word "example" in embodiments of this application is used to represent giving an example, an illustration, or a description. Any embodiment or design scheme described as an "example" in this application should not be explained as being more preferred or having more advantages than another embodiment or design scheme. Exactly, the word "example" is used to present a concept in a specific manner.

A network architecture and a service scenario described in embodiments of this application are intended to describe the technical solutions in embodiments of this application more clearly, and do not constitute a limitation on the technical solutions provided in embodiments of this application. Persons of ordinary skill in the art may know that: With the evolution of the network architecture and the emergence of new service scenarios, the technical solutions provided in embodiments of this application are also applicable to similar technical problems.

"And/or" in this application describes an association relationship for describing associated objects and represents that three relationships may exist. For example, A and/or B may represent the following three cases: Only A exists, both A and B exist, and only B exists. The character "/" generally indicates an "or" relationship between the associated objects.

"A plurality of" in this application means two or more.

In addition, it should be understood that in descriptions of this application, terms such as "first" and "second" are merely used for distinguishing and description, but should not be understood as indicating or implying relative importance, or should not be understood as indicating or implying a sequence.

For ease of understanding, the following describes an applicable scenario of embodiments of this application.

With continuous development of networks, mobile bearers have ever-changing demands on a microwave bandwidth, and requirements on a microwave transmission bandwidth are increasingly high. Currently, 28 MHz (megahertz, MHz) is a mainstream microwave bandwidth in the world. A backhaul capacity requirement of nearly 50% sites in the world has reached 500 Mbit/s. A 28 MHz channel bandwidth of a single frequency cannot meet the requirement, and a larger channel bandwidth is required.

For a microwave in a common frequency band, cross-polarization interference cancellation (cross-polarization interference cancellation, XPIC) and multiple-input multiple-output (multiple-input multiple-output, MIMO) technologies can be used to improve spectral efficiency, and a frequency spectrum can be increased to increase a bandwidth of a microwave link. To increase a frequency spectrum, a larger channel bandwidth, for example, 56 MHz, 112 MHz, or 224 MHz, may be used. However, a continuous large bandwidth is usually difficult to obtain and may cause more network interference. In this case, a non-contiguous frequency spectrum may be used to meet a capacity requirement. However, a current discrete frequency spectrum combination requires an independent transceiver system to be connected in a combination manner, which is complex in configuration, causing a series of problems such as a large quantity of outdoor unit (outdoor unit, ODU) hardware, a large quantity of intermediate frequency cables, large space occupied in a tower, and high maintenance costs.

Based on single-device CA, a non-contiguous frequency spectrum may be used to cope with requirements and challenges imposed by rapid bandwidth growth on microwaves. Few frequency spectrum resources are fully used for CA to achieve a larger bandwidth and meet requirements of 5G microwaves for a large bandwidth. An ODU that supports the CA may implement a plurality of software expansions after one time of hardware deployment. The ODU does not need to be added during upgrade. The ODU supports smooth evolution to a 5th generation (5th generation, 5G) network, to maximize protection of live network investment, reduce the total cost of ownership (total cost of ownership, TCO), and protect existing investment of customers.

To reduce device costs, a single-device CA module needs to allow a plurality of subcarriers to pass through a same radio frequency channel. However, when carriers in a plurality of frequency bands pass through a same PA, inter-carrier IMD intermodulation interference may occur. Usually, a DPD device is used to compensate for nonlinear distortion. A common manner in which a DPD device compensates for distortion is that carriers in a plurality of frequency bands pass through a PA, then pass through an independent feedback circuit, and couple a nonlinear signal to calculate a DPD coefficient, and then the DPD coefficient is transmitted through an antenna. The independent feedback channel increases extra hardware costs and device power consumption. In addition, a feedback channel at a local end cannot reflect nonlinearity of an entire transmitting and receiving link, and compensation for nonlinear distortion of a communication system is not accurate enough.

To reduce device costs and power consumption, and improve accuracy of compensating for nonlinear distortion of a communication system, embodiments of this application provide a communication method and apparatus. The communication apparatus and method provided in embodiments of this application may be applied to various communication systems. For example, a mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a 5G communication system (for example, a new radio (new radio, NR) system), and a future mobile communication system, for example, a 6G system. In addition, the communication apparatus and method provided in embodiments of this application may be applied to a satellite communication system, and the satellite communication system may be integrated with foregoing communication systems.

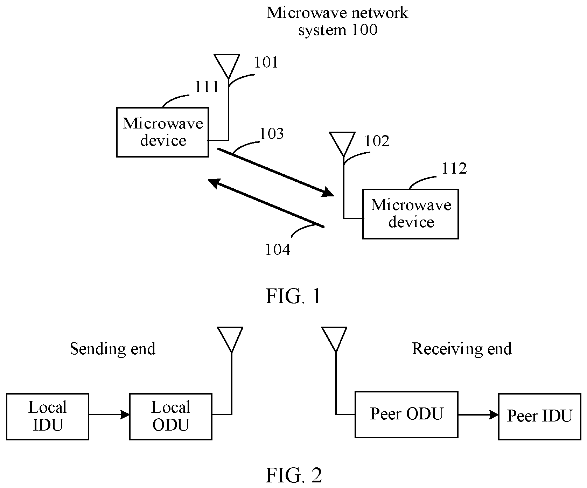

For ease of understanding of embodiments of this application, an application scenario of this application is described by using a microwave network architecture shown in FIG. 1 as an example. As shown in FIG. 1, a microwave network system 100 may include two or more microwave devices, and a microwave link between any two microwave devices. Signals may be received and transmitted between the microwave devices through an antenna, and one microwave device may include one or more antennas. The microwave network system 100 may be used for backhaul or fronthaul of a wireless signal. When a microwave device 111 to which an antenna 101 belongs serves as a transmitting end, the antenna 101 may send a signal to an antenna 102 through a microwave link 103. Correspondingly, when a microwave device 112 to which the antenna 102 belongs serves as a transmitting end, the antenna 102 may send a signal to the antenna 101 through a microwave link 104.

The communication system provided above is merely an example for description. It may be understood that a communication system using a solution of this application is not limited thereto. This is uniformly described herein, and details are not described below again.

Optionally, a transmitting end and a receiving end may be implemented through functional modules in FIG. 2. FIG. 2 is a diagram of a structure of a transmitting end and a receiving end according to an embodiment of this application. The transmitting end includes a local indoor unit (indoor unit, IDU), a local ODU, and an antenna. At the transmitting end, a signal is processed by the local IDU and the local ODU, and then transmitted through the antenna. The receiving end includes a peer IDU, a peer ODU, and an antenna. The receiving end receives the signal through the antenna, and then processes the received signal through the peer ODU and the peer ODU.

It may be understood that a structure shown in FIG. 2 does not constitute a specific limitation on the transmitting end and the receiving end. For example, in embodiments of this application, the transmitting end and the receiving end may include more or fewer components than those shown in the figure, or combine some components, or split some components, or have different component arrangements. This is uniformly described herein, and details are not described below again.

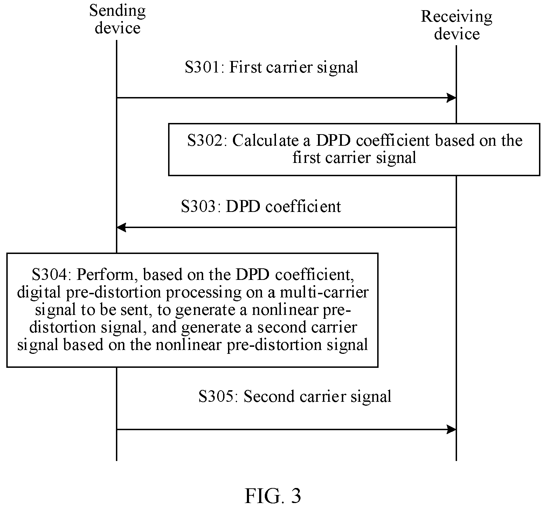

FIG. 3 is a communication method according to an embodiment of this application. The method includes the following steps.

S301: A sending device sends a first carrier signal to a receiving device, and correspondingly, the receiving device receives the first carrier signal.

For example, the sending device may be the microwave device 111, and the receiving device is the microwave device 112; or the sending device is the microwave device 112, and the receiving device is the microwave device 111.

Optionally, the sending device may process a baseband signal to be sent, to generate a plurality of subcarrier signals. Then, carrier-level processing is performed on the plurality of subcarrier signals. Then, carrier combination is performed on the plurality of subcarrier signals obtained through the carrier-level processing, to generate a multi-carrier signal to be sent, where the multi-carrier signal to be sent is loaded with the baseband signal. The plurality of subcarrier signals are combined into one carrier signal and share one radio frequency channel, so that hardware costs and power consumption can be reduced. Alternatively, the first carrier signal may be obtained by performing carrier combination on the plurality of subcarrier signals.

For example, the sending device may be the transmitting end in FIG. 2, and the receiving device may be the receiving end in FIG. 2.

S302: The receiving device calculates a DPD coefficient based on the first carrier signal.

In a possible implementation, after receiving the first carrier signal, the receiving device may decide the first carrier signal to obtain a decision signal of the first carrier signal, and then calculate the DPD coefficient based on the first carrier signal and the decision signal. A process of determining the decision signal may be completed by a decider in the receiving device. Optionally, the first carrier signal may include a plurality of subcarrier signals, and a quantity of deciders is the same as a quantity of subcarrier signals included in the first carrier signal. The decision signal may include a decision signal corresponding to each subcarrier signal. For example, the DPD coefficient may satisfy the following formula:

$$c(t + 1) = c(t) + \mu * \sum_{i}^{N-1} x_i^*(t) * \exp(-j2\pi f_i t) * \sum_{i}^{N-1}(x_i(t) - y_i(t)) *$$

$$\exp(j2\pi f_i t),$$

where $c(t+1)$ is the DPD coefficient, $c(t)$ is a DPD coefficient obtained through a previous time of calculation, $x_i$ represents an ith subcarrier signal in the first carrier signal, N represents the quantity of subcarrier signals included in the first carrier signal, $y_i$ is a decision signal corresponding to the ith subcarrier signal, $f_i$ is carrier frequency of the ith subcarrier, and $\mu$ is a constant.

An occasion for triggering the receiving device to calculate the DPD coefficient may include one or more of the following:

Occasion 1: After receiving any carrier signal sent by the sending device, the receiving device starts to calculate a DPD coefficient corresponding to the any carrier signal.

Occasion 2: The receiving device periodically calculates the DPD coefficient. On this occasion, although the receiving device receives a plurality of carrier signals sent by the sending device for a plurality of times, the DPD coefficient is not necessarily calculated for each carrier signal, but may be calculated once in a specific period. For example, each time a calculation period starting point arrives, a DPD coefficient of a carrier signal that is received most recently is calculated and fed back to the sending device.

Optionally, after receiving the first carrier signal, the receiving device may further first perform down-conversion processing on the first carrier signal to generate a first carrier signal obtained through the down-conversion. If the first carrier signal obtained through the down-conversion is a first carrier signal in an analog signal form, the receiving device may convert the first carrier signal in the analog signal form into the first carrier signal in a digital signal form, and then perform carrier separation on the first carrier signal in the digital signal form to generate the plurality of subcarrier signals. Then, carrier-level processing is performed on the plurality of subcarrier signals. Then, timing synchronization and signal equalization are performed on the plurality of subcarrier signals obtained through the carrier-level processing, and then the plurality of subcarrier signals obtained through the timing synchronization and the signal equalization are decided to obtain a decision signal corresponding to each of the plurality of subcarrier signals.

S303: The receiving device sends the DPD coefficient to the sending device, and correspondingly, the sending device receives the DPD coefficient.

S304: The sending device performs, based on the DPD coefficient, digital pre-distortion processing on a multi-carrier signal to be sent subsequently, to generate a nonlinear pre-distortion signal, and generates a second carrier signal based on the nonlinear pre-distortion signal.

Optionally, if the nonlinear pre-distortion signal is a nonlinear pre-distortion signal in the digital signal form, the sending device may first convert the nonlinear pre-distortion signal in the digital signal form into the nonlinear pre-distortion signal in the analog signal form, then perform up-conversion processing on the nonlinear pre-distortion signal in the analog signal form, and perform power amplification on the nonlinear pre-distortion signal obtained through the up-conversion processing, to generate the second carrier signal. Generally, in a power amplification process, an amplitude and a phase of a signal are nonlinearly distorted. In this way, after nonlinear pre-distortion is processed on the signal, nonlinear components of the nonlinear pre-distortion signal and the second carrier signal have a same amplitude and opposite phases, and an amplitude and a phase of the signal to be sent are improved from a nonlinear amplitude and phase to a linear amplitude and phase, so that nonlinear distortion in the power amplification process can be compensated for. The first carrier signal may alternatively be obtained by performing the processing process on the nonlinear pre-distortion signal.

S305: The sending device transmits the second carrier signal to the receiving device, and correspondingly, the receiving device receives the second carrier signal.

In the communication method, the receiving device determines the DPD coefficient based on the first carrier signal sent by the sending device. The sending device compensates for, based on the DPD coefficient fed back by the receiving device, nonlinear distortion of the multi-carrier signal to be sent subsequently, then generates the second carrier signal, and sends the second carrier signal to the receiving device. As the first carrier signal is sent to the receiving device through transmission, the DPD coefficient determined by the receiving device based on the first carrier signal can accurately reflect a nonlinear distortion state between the sending device and the receiving device. Therefore, after the nonlinear distortion of the multi-carrier signal to be sent subsequently is compensated for based on the DPD coefficient, accuracy of compensating for the nonlinear distortion of the signal can be improved. In addition, the receiving device dynamically calculates the DPD coefficient based on the received carrier signal, so that the receiving device can cope with changes in scenarios such as high and low temperatures, device aging, and a frequency change, to improve performance and applicability of nonlinear compensation.

In a related technology, an independent feedback circuit needs to be arranged in the sending device, and the feedback circuit calculates the DPD coefficient, increasing hardware costs and power consumption of the sending device.

However, in the solution of this application, because the DPD coefficient is determined by the receiving device based on a most recently received carrier signal, and does not need to be calculated by relying on the independent feedback circuit in the sending device, the independent feedback circuit in the sending device may be omitted, to reduce hardware costs and power consumption.

Optionally, if the sending device expects to continue to send a signal after sending the second carrier signal, but has not received the DPD coefficient that is calculated based on the second carrier signal and that is fed back by the receiving device, the sending device may further process and send, based on the DPD coefficient obtained through calculation based on the first carrier signal, another multi-carrier signal to be sent. In other words, the sending device may process and send, for one or more times based on a DPD coefficient most recently fed back by the receiving device, a carrier signal to be sent subsequently.

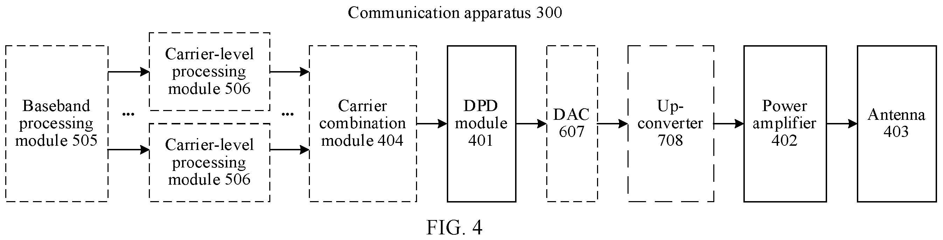

Based on the foregoing communication method, an embodiment of this application further provides a communication apparatus. For similarities, refer to descriptions in the foregoing communication method. Details are not described herein again. FIG. 4 is a diagram of a structure of a communication apparatus 300 according to an embodiment of this application. The communication apparatus 300 includes a DPD module 401, a power amplifier 402, an antenna 403, a carrier combination module 404 (optional), a baseband processing module 505 (optional), a carrier-level processing module 506 (optional), a digital-to-analog converter (digital-to-analog converter, DAC) 607 (optional), and an up-converter 708 (optional).

The baseband processing module 505 may process a baseband signal to be sent, to generate a plurality of subcarrier signals. A quantity of carrier-level processing modules 506 is the same as a quantity of the plurality of subcarrier signals. Each carrier-level processing module 506 may perform carrier-level processing on one corresponding subcarrier signal in the plurality of subcarrier signals, and then the carrier combination module 404 performs carrier combination on the plurality of subcarrier signals obtained through the carrier-level processing, to generate a multi-carrier signal to be sent. The DPD module 401 performs, based on a DPD coefficient fed back by a receiving device, digital pre-distortion processing on the multi-carrier signal to be sent, to generate a nonlinear pre-distortion signal. If the nonlinear pre-distortion signal is a nonlinear pre-distortion signal in a digital signal form, the DAC 607 may convert the nonlinear pre-distortion signal in the digital signal form into the nonlinear pre-distortion signal in an analog signal form, and then the up-converter 708 performs up-conversion processing on the nonlinear pre-distortion signal in the analog signal form. The power amplifier 402 may perform power amplification on the nonlinear pre-distortion signal obtained through the up-conversion processing to generate a second carrier signal. Finally, the antenna 403 transmits the second carrier signal.

The following describes possible implementations of some functional modules in the communication apparatus 300.

The power amplifier 402 usually refers to an amplification circuit that can output a high-power signal. For example, a power amplifier is a PA. The carrier combination module 404 may be a carrier addition combination module. The carrier addition combination module may perform carrier addition combination on a subcarrier signal A and a subcarrier signal B to generate a multi-carrier signal A+B.

The baseband processing module 505 may include one or more of an encoding module, a modulation module, and a molding and filtering module. Optionally, the baseband processing module 505 may further include a plurality of baseband processing units, and one subcarrier signal corresponds to one baseband processing unit, that is, one baseband processing unit may generate one subcarrier signal. In a possible implementation, a quantity of signal flows of the baseband signal may be the same as a quantity of subcarrier signals.

The carrier-level processing module 506 may include one or more of a rate adjustment module and a carrier frequency shift module to perform rate adjustment and frequency adjustment on a subcarrier. The rate adjustment module may match a rate of the subcarrier signal with a rate of a carrier signal. The carrier frequency shift module may shift a baseband frequency (where in this case, a frequency of the subcarrier is the baseband frequency) to an air interface frequency.

Optionally, the communication apparatus 300 may include more or fewer functional modules than those in FIG. 4. For example, the communication apparatus 300 may further include a duplexer. The duplexer is separately connected to the power amplifier 402 and the antenna 403, and is configured to separate a transmitted signal and a received signal of the communication apparatus 300, to prevent a transmitted signal at a local end from being transmitted to a receiver. For another example, one or more of the carrier-level processing module 506, the carrier combination module 404, the DPD module 401, the DAC 607, or the up-converter 708 may be integrated into one module, for example, integrated into an intermediate frequency digital processing module.

In some deployment scenarios, the communication apparatus 300 may specifically include an IDU and an ODU, where the IDU and the ODU may be centrally deployed at a same location, or may be respectively deployed at different locations. For example, if the IDU and the ODU are respectively deployed at different locations, the IDU may be deployed indoors (for example, in an indoor cabinet), and the ODU may be deployed outdoors. Optionally, the communication apparatus 300 further includes an intermediate frequency cable and/or an optical fiber, and the IDU and the ODU are connected through the intermediate frequency cable and/or the optical fiber. For example, the intermediate frequency cable includes an ADC and/or a DAC, and the optical fiber includes a common public radio interface (common public radio interface, CPRI) optical fiber.

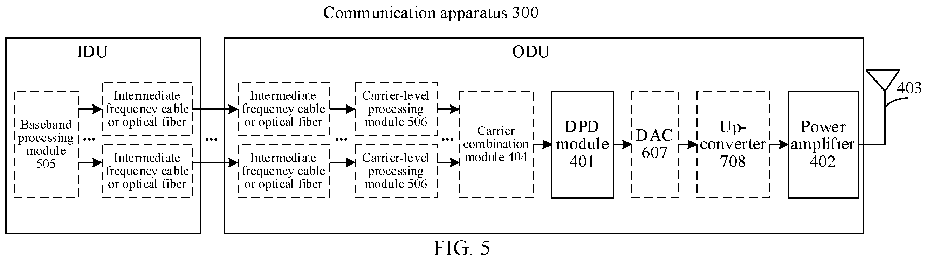

The IDU and the ODU include a plurality of splitting manners, and modules included in the IDU and the ODU are different in different splitting manners. For example, in this deployment scenario, a diagram of a structure of the communication apparatus 300 is shown in FIG. 5. The IDU includes the baseband processing module 505 (optional). The ODU includes the carrier-level processing module 506 (optional), the carrier combination module 404 (optional), the DPD module 401, the DAC 607 (optional), the up-converter 708 (optional), the power amplifier 402, and the antenna 403. The baseband processing module 505 and the carrier-level processing module 506 may be connected through an intermediate frequency cable or an optical fiber. Optionally, if the IDU does not include the baseband processing module 505, the IDU may obtain a baseband signal and then send the baseband signal.

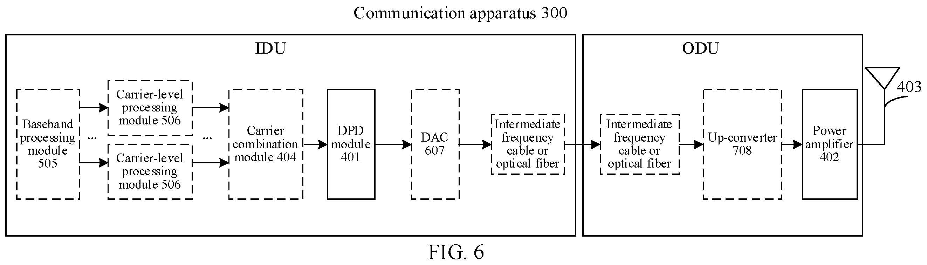

For another example, another diagram of a structure of the communication apparatus 300 is shown in FIG. 6. The IDU includes the baseband processing module 505 (optional), the carrier-level processing module 506 (optional), the carrier combination module 404 (optional), the DPD module 401, and the DAC 607 (optional). The ODU includes the up-converter 708 (optional), the power amplifier 402, and the antenna 403. The DAC 607 may be connected to the up-converter 708 through an intermediate frequency cable or an optical fiber.

From FIG. 3 to FIG. 5, the DAC 607, the up-converter 708, and the power amplifier 402 belong to a same radio frequency channel, that is, a plurality of subcarrier signals share one radio frequency channel, so that hardware costs and power consumption can be reduced.

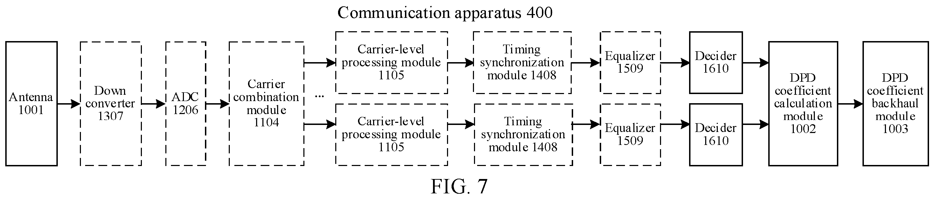

Based on the foregoing communication method, as shown in FIG. 7, an embodiment of this application further provides a diagram of a structure of a communication apparatus 400. The communication apparatus 400 includes an antenna 1001, a DPD coefficient calculation module 1002, a DPD coefficient backhaul module 1003, a carrier separation module 1104 (optional), a carrier-level processing module 1105 (optional), an ADC 1206 (optional), a down-converter 1307 (optional), a timing synchronization module 1408 (optional), an equalizer 1509 (optional), and a decider 1610 (optional).

The antenna 1001 may receive a first carrier signal sent by a sending device. The down-converter 1307 performs down-conversion processing on the first carrier signal, to generate a first carrier signal obtained through the down-conversion. If the first carrier signal obtained through the down-conversion is a first carrier signal in an analog signal form, the ADC 1206 may convert the first carrier signal in the analog signal form into the first carrier signal in a digital signal form, and then the carrier separation module 1104 performs carrier separation on the first carrier signal in the digital signal form to generate a plurality of subcarrier signals. Quantities of carrier-level processing modules 1105, timing synchronization modules 1408, equalizers 1509, and deciders 1610 are the same as a quantity of the plurality of subcarrier signals. Each carrier-level processing module 1105 may perform carrier-level processing on one corresponding subcarrier signal in the plurality of subcarrier signals. The timing synchronization module 1408 may perform timing synchronization on the plurality of subcarrier signals obtained through the carrier-level processing, and the equalizer 1509 may perform signal equalization on the plurality of subcarrier signals obtained through the timing synchronization. The decider 1610 may decide the plurality of subcarrier signals obtained through the signal equalization to obtain a decision signal corresponding to each of the plurality of subcarrier signals. The DPD coefficient calculation module 1002 may calculate a DPD coefficient based on each subcarrier signal and the decision signal corresponding to each subcarrier signal. Then, the DPD coefficient backhaul module 1003 sends the DPD coefficient to the antenna 1001. Finally, the antenna 1001 sends the DPD coefficient to the sending device.

The DPD coefficient calculated by the DPD coefficient calculation module 1002 may satisfy the following formula:

$$c(t+1) = c(t) + \mu * \sum_{i}^{N-1} x_i^*(t) * \exp(-j2\pi f_i t) * \sum_{i}^{N-1}(x_i(t) - y_i(t)) * \exp(j2\pi f_i t),$$

where $c(t+1)$ is the DPD coefficient, $c(t)$ is a DPD coefficient obtained through a previous time of calculation, $x_i$ represents an ith subcarrier signal in the first carrier signal, N represents a quantity of subcarrier signals included in the first carrier signal, $y_i$ is a decision signal corresponding to the ith subcarrier signal, $f_i$ is a carrier frequency of the ith subcarrier, $\mu$ is a constant, and $x_i^*$ represents a conjugate value of $x_i$. If a carrier signal is a carrier signal in a digital signal form, in the formula, $x_i$ may further represent a carrier value of the carrier signal at a moment t, or $y_i$ may further represent a decision value of a decision signal at the moment $t$. In a single-carrier scenario, a quantity of subcarrier signals is 1, and a value of $N$ is also 1.

The following describes possible implementations of some functional modules in the communication apparatus 400.

The timing synchronization module 1408 may specifically reduce inter-code interference between carrier signals (and/or between subcarrier signals) by obtaining a symbol-level synchronization clock and a collection point.

The equalizer 1509 may specifically reduce or eliminate signal distortion caused by the inter-code interference by suppressing amplitude and phase unflatness of a spatial channel and an analog circuit, to improve signal quality.

Optionally, the communication apparatus 400 may include more or fewer functional modules than those in FIG. 7. For example, one or more modules of the carrier separation module 1104, the carrier-level processing module 1105, the ADC 1206, the down-converter 1307, the timing synchronization module 1408, the equalizer 1509, or the decider 1610 may be integrated into one module, for example, integrated into a microwave intermediate frequency processing module.

In some deployment scenarios, the communication apparatus 400 may specifically include an IDU and an ODU, where the IDU and the ODU may be centrally deployed at a same location, or may be respectively deployed at different locations. For example, if the IDU and the ODU are respectively deployed at different locations, the IDU may be deployed indoors, and the ODU may be deployed outdoors. Optionally, the communication apparatus 400 further includes an intermediate frequency cable and/or an optical fiber, and the IDU and the ODU are connected through the intermediate frequency cable and/or the optical fiber. For example, the intermediate frequency cable includes a DAC and/or an ADC.

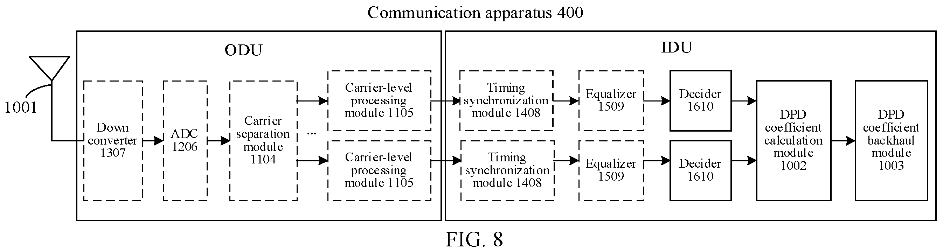

The IDU and the ODU include a plurality of splitting manners, and modules included in the IDU and the ODU are different in different splitting manners. For example, in this deployment scenario, a diagram of a structure of the communication apparatus 400 is shown in FIG. 8. The ODU includes the antenna 1001, the down-converter 1307 (optional), the ADC 1206 (optional), the carrier separation module 1104 (optional), and the carrier-level processing module 1105 (optional). The IDU includes the timing synchronization module 1408 (optional), the equalizer 1509 (optional), the decider 1610 (optional), the DPD coefficient calculation module 1002, and the DPD coefficient backhaul module 1003. The carrier-level processing module 1105 and the timing synchronization module 1408 may be connected through an intermediate frequency cable or an optical fiber.

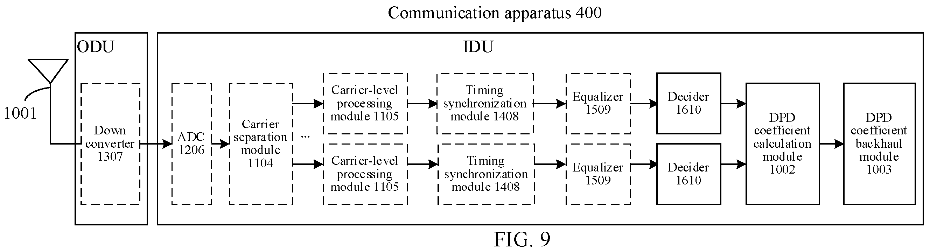

For another example, another diagram of a structure of the communication apparatus 400 is shown in FIG. 9. The ODU includes the antenna 1001 and the down-converter 1307 (optional). The IDU includes the ADC 1206 (optional), the carrier separation module 1104 (optional), the carrier-level processing module 1105 (optional), the timing synchronization module 1408 (optional), the equalizer 1509 (optional), the decider 1610 (optional), the DPD coefficient calculation module 1002, and the DPD coefficient backhaul module 1003. The down-converter 1307 and the ADC 1206 may be connected through an intermediate frequency cable or an optical fiber.

The communication apparatus 400 may dynamically calculate a DPD coefficient to cope with changes in scenarios, such as high and low temperatures, device aging, and a frequency change, to improve performance and increase applicable scenarios of nonlinear compensation, and further support a transmitting end in obtaining higher transmit power, and improve an error vector magnitude (error vector magnitude, EVM) and a mean-square error (mean-square error, MSE) of a receiving end. This helps meet requirements of a protocol on a frequency spectrum template and spurious emission.

It may be understood that, based on a requirement, the communication apparatus 300 and the communication apparatus 400 may further include more or fewer physical components or functional modules. Alternatively, the foregoing physical components or functional modules may be respectively deployed in different components or modules, or may be integrated and deployed in one component or module. The communication apparatus and method provided in embodiments of this application may be applied to a microwave aggregation system in microwave communication, or may be applied to a microwave system that supports a single microwave.

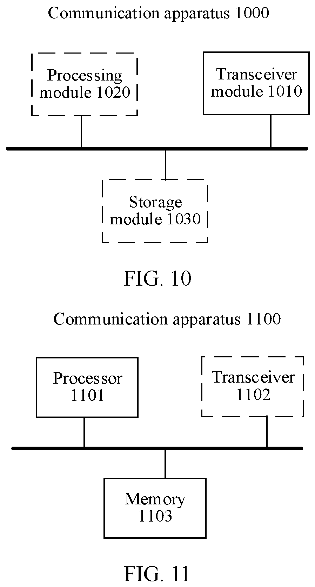

Based on the foregoing description of a principle of the communication method, the following describes in detail another possible communication apparatus provided in an embodiment of this application. As shown in FIG. 10, a communication apparatus 1000 is provided. The communication apparatus 1000 can perform the steps in the method in FIG. 3. To avoid repetition, details are not described herein again. The communication apparatus 1000 includes a transceiver module 1010, and optionally, further includes a processing module 1020 and a storage module 1030. The processing module 1020 may be separately connected to the storage module 1030 and the transceiver module 1010. The storage module 1030 may also be connected to the transceiver module 1010.

The storage module 1030 is configured to store a computer program. In an implementation, if the processing module 1020 has a storage function, the communication apparatus 1000 may not include the storage module 1030.

For example, when the communication apparatus 1000 is used in a transmitting end, the transceiver module 1010 is configured to: send a first carrier signal to a receiving device, and obtain a digital pre-distortion DPD coefficient fed back by the receiving device, where the DPD coefficient is determined by the receiving device based on the received first carrier signal. The processing module 1020 is configured to perform, based on the DPD coefficient, digital pre-distortion processing on a multi-carrier signal to be sent, to generate a nonlinear pre-distortion signal, and generate a second carrier signal based on the nonlinear pre-distortion signal, where the multi-carrier signal to be sent is loaded with a baseband signal. The transceiver module 1010 is further configured to transmit the second carrier signal to the receiving device.

In an implementation, the processing module 1020 is specifically configured to perform power amplification on the nonlinear pre-distortion signal to output the second carrier signal, where nonlinear components of the nonlinear pre-distortion signal and the second carrier signal have a same amplitude and opposite phases.

In an implementation, the processing module 1020 is further configured to obtain a plurality of subcarrier signals, and perform carrier combination on the plurality of subcarrier signals, to generate a multi-carrier signal to be sent.

In an implementation, the processing module 1020 is further configured to process a baseband signal to be sent, to generate the plurality of subcarrier signals, then perform carrier-level processing on each subcarrier signal, and perform carrier combination on the plurality of subcarrier signals obtained through the carrier-level processing.

In an implementation, the processing module 1020 is further configured to perform, based on the DPD coefficient, digital pre-distortion processing on the multi-carrier signal to be sent, to generate the nonlinear pre-distortion signal in a digital signal form, convert the nonlinear pre-distortion signal in the digital signal form into the nonlinear pre-distortion signal in an analog signal form, and perform power amplification on the nonlinear pre-distortion signal in the analog signal form.

In an implementation, the processing module 1020 is further configured to perform up-conversion on the nonlinear pre-distortion signal, and perform power amplification on the nonlinear pre-distortion signal obtained through the up-conversion.

For another example, when the communication apparatus 1000 is used in a receiving end, the transceiver module 1010 is configured to receive a first carrier signal sent by a sending device. The processing module 1020 is configured to calculate a DPD coefficient based on the carrier signal. The transceiver module 1010 is further configured to send the DPD coefficient, and receive the second carrier signal sent by the sending device. The second carrier signal is generated by the sending device based on a nonlinear pre-distortion signal that is generated by performing, based on the DPD coefficient, digital pre-distortion processing on a multi-carrier signal to be sent.

In an implementation, the processing module 1020 is further configured to separate the first carrier signal into a plurality of subcarrier signals, respectively perform carrier-level processing on the plurality of subcarrier signals, and calculate the DPD coefficient based on the plurality of subcarrier signals obtained through the carrier-level processing.

In an implementation, the transceiver module 1010 is further configured to receive the first carrier signal in an analog signal form. The processing module 1020 is further configured to convert the first carrier signal in the analog signal form into the first carrier signal in a digital signal form, and calculate the DPD coefficient based on the first carrier signal in the digital signal form.

In an implementation, the processing module 1020 is further configured to perform down-conversion on the carrier signal, and calculate the DPD coefficient based on the first carrier signal obtained through the down-conversion.

In an implementation, the processing module 1020 is further configured to perform signal decision on the first carrier signal to obtain a decision signal of the first carrier signal; and when calculating the DPD coefficient based on the first carrier signal, calculate the DPD coefficient based on the first carrier signal and the decision signal.

In an implementation, the first carrier signal may include a plurality of subcarrier signals, and the decision signal may include a decision signal corresponding to each subcarrier signal. The processing module 1020 is specifically configured to calculate the DPD coefficient based on each subcarrier signal, the decision signal corresponding to each subcarrier signal, and the following formula:

$$c(t + 1) = c(t) + \mu * \sum_{i}^{N-1} x_i^*(t) * \exp(-j2\pi f_i t) * \sum_{i}^{N-1} (x_i(t) - y_i(t)) * \exp(j2\pi f_i t)$$,

where $c(t+1)$ is the DPD coefficient, $c(t)$ is a DPD coefficient obtained through a previous time of calculation, $x_i$ represents an ith subcarrier signal in the first carrier signal, N represents a quantity of subcarrier signals included in the first carrier signal, $y_i$ is a decision signal corresponding to the ith subcarrier signal, $f_i$ is a carrier frequency of the ith subcarrier, and $\mu$ is a constant.

FIG. 11 is a block diagram of a communication apparatus 1100 according to an embodiment of this application. It should be understood that the communication apparatus 1100 can perform the steps in the method in FIG. 3. To avoid repetition, details are not described herein again. The communication apparatus 1100 includes a processor 1101 and a memory 1103. The processor 1101 and the memory 1103 are electrically coupled.

The memory 1103 is configured to store computer program instructions, and the processor 1101 is configured to execute some or all of the computer program instructions in the memory. When the some or all of the computer program instructions are executed, the apparatus implements the method in the foregoing embodiments.

In an implementation, if the processing module processor 1101 has a storage function, the communication apparatus 1100 may not include the memory 1103.

It should be understood that the communication apparatus 1100 shown in FIG. 11 may be a chip or a circuit, for example, a chip or a circuit that may be arranged at a transmitting end or a receiving end. Optionally, the communication apparatus 1100 further includes a transceiver 1102, and the transceiver 1102 may alternatively be a communication interface. The transceiver includes a receiver and a transmitter. Further, the communication apparatus 1100 may include a bus system.

The processor 1101, the memory 1103, and the transceiver 1102 are connected through the bus system. The processor 1101 is configured to execute instructions stored in the memory 1103 to control the transceiver to receive a signal and send a signal, to complete the steps in the communication method in this application. The memory 1103 may be integrated into the processor 1101, or may be arranged separately from the processor 1101.

In an implementation, it may be considered that a function of the transceiver 1102 is implemented through a transceiver circuit or a dedicated transceiver chip. It may be considered that the processor 1101 is implemented through a dedicated processing chip, a processing circuit, a processor, or a general-purpose chip.

The processor may be a central processing unit (central processing unit, CPU), a network processor (network processor, NP), or a combination of a CPU and an NP.

The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), generic array logic (generic array logic, GAL) or another programmable logic device, a discrete gate or a transistor logic device, a discrete hardware component, or the like, or any combination thereof. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory described in this application aims to include but is not limited to these memories and any memory of another appropriate type.

An embodiment of this application provides a computer storage medium. The computer storage medium stores a computer program. The computer program includes instructions used to perform the foregoing communication method.

An embodiment of this application provides a computer program product including instructions. When the computer program product runs on a computer, the computer is enabled to perform the communication method provided above.

An embodiment of this application further provides a communication system, including a sending device and a receiving device. The sending device and the receiving device may implement the communication procedure shown in FIG. 3. For example, the sending device may be the foregoing communication apparatus 300, and the receiving device may be the foregoing communication apparatus 400.

Persons of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that, the foregoing described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual communication connections may be implemented through some interfaces. The indirect couplings or communication connections between the apparatuses or units may be implemented in electronic, mechanical, or other forms.

In addition, units in the apparatus embodiments of this application may be integrated into one processing unit, or each of the units may exist alone physically, or two or more units may be integrated into one unit.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or may be any conventional processor or the like.

All or some of the methods in embodiments of this application may be implemented by software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, the procedures or the functions in embodiments of this application are all or partially executed. The computer may be a general-purpose computer, a dedicated computer, a computer network, or other programmable apparatuses. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media. The usable medium may be a magnetic medium such as a floppy disk, a hard disk, or a magnetic tape, or may be an optical medium such as a CD-ROM or a DVD, or may be a semiconductor medium such as a solid state disk (solid state disk, SSD), a random access memory (random access memory, RAM), a read-only memory (read-only memory, ROM), or a register.

Persons skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Although example embodiments of this application are described, persons skilled in the art can make changes and modifications to these embodiments after they learn of a basic inventive concept. Therefore, the appended claims are intended to be construed as to cover the preferred embodiments and all changes and modifications falling within the scope of this application.

Clearly, persons skilled in the art can make various modifications and variations to embodiments of this application without departing from the spirit and scope of embodiments of this application. In this way, this application is intended to cover these modifications and variations of embodiments of this application provided that they fall within the scope of the claims and their equivalent technologies of this application.

**Claims**

1. A communication method, comprising:

sending, by a sending device, a first carrier signal to a receiving device;
obtaining, by the sending device, a digital pre-distortion DPD coefficient fed back by the receiving device, wherein the DPD coefficient is determined by the receiving device based on the received first carrier signal;
performing, by the sending device based on the DPD coefficient, digital pre-distortion processing on a multi-carrier signal to be sent, to generate a nonlinear pre-distortion signal, and generating a second carrier signal based on the nonlinear pre-distortion signal, wherein the multi-carrier signal to be sent is loaded with a baseband signal; and
sending, by the sending device, the second carrier signal to the receiving device.

2. The method according to claim 1, wherein the generating, by the sending device, a second carrier signal based on the nonlinear pre-distortion signal comprises:
performing, by the sending device, power amplification on the nonlinear pre-distortion signal, to output the second carrier signal, wherein nonlinear components of the nonlinear pre-distortion signal and the second carrier signal have a same amplitude and opposite phases.

3. The method according to claim 1 or 2, wherein the method further comprises:
obtaining, by the sending device, a plurality of subcarrier signals, and performing, by the sending device, carrier combination on the plurality of subcarrier signals, to generate the multi-carrier signal to be sent.

4. The method according to claim 3, wherein the obtaining, by the sending device, a plurality of subcarrier signals comprises: processing, by the sending device, a baseband signal to be sent, to generate the plurality of subcarrier signals;

the method further comprises: respectively performing, by the sending device, carrier-level processing on the plurality of subcarrier signals; and
the performing, by the sending device, carrier combination on the plurality of subcarrier signals comprises:
performing, by the sending device, carrier combination on the plurality of subcarrier signals obtained through the carrier-level processing.

5. The method according to claim 2, wherein the performing, by the sending device based on the DPD coefficient, digital pre-distortion processing on a multi-carrier signal to be sent, to generate a nonlinear pre-distortion signal comprises:

performing, by the sending device based on the DPD coefficient, digital pre-distortion processing on the multi-carrier signal to be sent, to generate a nonlinear pre-distortion signal in a digital signal form;
converting, by the sending device, the nonlinear pre-distortion signal in the digital signal form into the nonlinear pre-distortion signal in an analog signal form; and
the performing, by the sending device, power amplification on the nonlinear pre-distortion signal comprises:
performing, by the sending device, power amplification on the nonlinear pre-distortion signal in the analog signal form.

6. The method according to claim 2, wherein after the performing, by the sending device based on the DPD coefficient, digital pre-distortion processing on a multi-carrier signal to be sent, to generate a nonlinear pre-distortion signal, the method further comprises:

performing, by the sending device, up-conversion on the nonlinear pre-distortion signal; and
the performing, by the sending device, power amplification on the nonlinear pre-distortion signal comprises:
performing, by the sending device, power amplification on the nonlinear pre-distortion signal obtained through the up-conversion.

7. A communication method, comprising:

receiving, by a receiving device, a first carrier signal sent by a sending device;
calculating, by the receiving device, a DPD coefficient based on the first carrier signal;
sending, by the receiving device, the DPD coefficient to the sending device; and
receiving, by the receiving device, a second carrier signal sent by the sending device, wherein the second carrier signal is generated by the sending device based on a nonlinear pre-distortion signal that is generated by performing, based on the DPD coefficient, digital pre-distortion processing on a multi-carrier signal to be sent.

8. The method according to claim 7, wherein the method further comprises:

deciding, by the receiving device, the first carrier signal to obtain a decision signal of the first carrier signal; and
the calculating, by the receiving device, a DPD coefficient based on the first carrier signal comprises:
calculating, by the receiving device, the DPD coefficient based on the first carrier signal and the decision signal.

9. The method according to claim 8, wherein the first carrier signal comprises a plurality of subcarrier signals, and the decision signal comprises a decision signal corresponding to each subcarrier signal; and
the calculating, by the receiving device, the DPD coefficient based on the first carrier signal and the decision signal comprises:

calculating, by the receiving device, the DPD coefficient based on each subcarrier signal, the decision signal corresponding to each subcarrier signal, and the following formula:

$$c(t+1) = c(t) + \mu * \sum_i^{N-1} x_i^*(t) * \exp(-j2\pi f_i t) * \sum_i^{N-1}(x_i(t) - y_i(t)) * \exp(j2\pi f_i t),$$

wherein $c(t+1)$ is the DPD coefficient, $c(t)$ is a DPD coefficient obtained through a previous time of calculation, $x_i$ represents an ith subcarrier signal in the first carrier signal, N represents a quantity of subcarrier signals comprised in the first carrier signal, $y_i$ is a decision signal corresponding to the ith subcarrier signal, $f_i$ is a carrier frequency of the ith subcarrier, and $\mu$ is a constant.

10. The method according to any one of claims 7 to 9, wherein after the receiving, by a receiving device, a first carrier signal sent by a sending device, the method further comprises:

separating, by the receiving device, the first carrier signal into a plurality of subcarrier signals; and
respectively performing, by the receiving device, carrier-level processing on the plurality of subcarrier signals; and
the calculating, by the receiving device, a DPD coefficient based on the first carrier signal comprises:
calculating, by the receiving device, the DPD coefficient based on the plurality of subcarrier signals obtained through the carrier-level processing.

11. The method according to any one of claims 7 to 10, wherein the receiving, by a receiving device, a first carrier signal sent by a sending device comprises:

receiving, by the receiving device, the first carrier signal in an analog signal form, and converting the first carrier signal in the analog signal form into the first carrier signal in a digital signal form; and
the calculating, by the receiving device, a DPD coefficient based on the first carrier signal comprises:
calculating, by the receiving device, the DPD coefficient based on the first carrier signal in the digital signal form.

12. The method according to any one of claims 7 to 11, wherein after the receiving, by a receiving device, a first carrier signal sent by a sending device, the method further comprises:

performing, by the receiving device, down-conversion on the first carrier signal; and
the calculating, by the receiving device, a DPD coefficient based on the first carrier signal comprises:
calculating, by the receiving device, the DPD coefficient based on the first carrier signal obtained through the down-conversion.

13. A communication apparatus, comprising a digital pre-distortion DPD module, a power amplifier, and an antenna, wherein the power amplifier is separately connected to the DPD module and the antenna;

the antenna is configured to: send a first carrier signal to a receiving device, and obtain a DPD coefficient fed back by the receiving device, wherein the DPD coefficient is determined by the receiving device based on the received first carrier signal;
the DPD module is configured to perform, based on the DPD coefficient, digital pre-distortion processing on a multi-carrier signal to be sent, to generate a nonlinear pre-distortion signal, wherein the multi-carrier signal to be sent is loaded with a baseband signal;
the power amplifier is configured to generate a second carrier signal based on the nonlinear pre-distortion signal; and
the antenna is further configured to transmit the second carrier signal to the receiving device.

14. The apparatus according to claim 13, wherein the power amplifier is specifically configured to perform power amplification on the nonlinear pre-distortion signal to output the second carrier signal, wherein nonlinear components of the nonlinear pre-distortion signal and the second carrier signal have a same amplitude and opposite phases.

15. The apparatus according to claim 13 or 14, further comprising a carrier combination module, wherein the carrier combination module is connected to the DPD module; and

the carrier combination module is configured to perform carrier combination on a plurality of subcarrier signals, to generate the multi-carrier signal to be sent.

16. The apparatus according to claim 15, further comprising a baseband processing module and a carrier-level processing module, wherein the carrier-level processing module is separately connected to the baseband processing module and the carrier combination module, and a quantity of the carrier-level processing modules is the same as a quantity of the plurality of subcarrier signals;

the baseband processing module is configured to process a baseband signal to be sent, to generate the plurality of subcarrier signals;
the carrier-level processing module is configured to perform carrier-level processing on one of the plurality of subcarrier signals; and
the carrier combination module is specifically configured to perform carrier combination on the plurality of subcarrier signals obtained through the carrier-level processing.

17. The apparatus according to claim 14, further comprising a digital-to-analog converter DAC, wherein the DAC is separately connected to the DPD module and the power amplifier;

the DPD module is specifically configured to perform, based on the DPD coefficient, digital pre-distortion processing on the multi-carrier signal to be sent, to generate a nonlinear pre-distortion signal in a digital signal form;
the DAC is configured to convert the nonlinear pre-distortion signal in the digital signal form into the nonlinear pre-distortion signal in an analog signal form; and
the power amplifier is specifically configured to perform power amplification on the nonlinear pre-distortion signal in the analog signal form.

18. The apparatus according to claim 14, further comprising an up-converter, wherein the up-converter is separately connected to the DPD module and the power amplifier;

the up-converter is configured to perform up-conversion on the nonlinear pre-distortion signal; and
the power amplifier is specifically configured to perform power amplification on the nonlinear pre-distortion signal obtained through the up-conversion.

19. The apparatus according to claim 17, wherein the DAC is connected to the power amplifier through an intermediate frequency cable or an optical fiber.

20. The apparatus according to claim 16, wherein the baseband processing module is connected to the carrier-level processing module through an intermediate frequency cable or an optical fiber.

21. A communication apparatus, comprising an antenna, a digital pre-distortion DPD coefficient calculation module, and a DPD coefficient backhaul module, wherein

the antenna is configured to receive a first carrier signal sent by a sending device;
the DPD coefficient calculation module is configured to calculate a DPD coefficient based on the first carrier signal;
the DPD coefficient backhaul module is configured to send the DPD coefficient to the antenna; and
the antenna is further configured to send the DPD coefficient to the sending device, and receive a second carrier signal sent by the sending device, wherein the second carrier signal is generated by the sending device based on a nonlinear pre-distortion signal that is generated by performing, based on the DPD coefficient, digital pre-distortion processing on a multi-carrier signal to be sent.

22. The apparatus according to claim 21, further comprising a decider, wherein the decider is separately connected to the antenna and the DPD coefficient calculation module;

the decider is configured to decide the first carrier signal to obtain a decision signal of the first carrier signal; and
the DPD coefficient calculation module is specifically configured to calculate the DPD coefficient based on the first carrier signal and the decision signal.

23. The apparatus according to claim 22, wherein the first carrier signal comprises a plurality of subcarrier signals, the decision signal comprises a decision signal corresponding to each subcarrier signal, and a quantity of the deciders is the same as a quantity of the plurality of subcarrier signals; and

the DPD coefficient calculation module is specifically configured to calculate the DPD coefficient based on each subcarrier signal, the decision signal corresponding to each subcarrier signal, and the following formula:

$$c(t + 1) = c(t) + \mu * \sum_i^{N-1} x_i^*(t) * \exp(-j2\pi f_i t) * \sum_i^{N-1} (x_i(t) - y_i(t)) * \exp(j2\pi f_i t),$$

wherein $c(t + 1)$ is the DPD coefficient obtained through calculation, $c(t)$ is a DPD coefficient obtained through a previous time of calculation, $x_i$ represents an ith subcarrier signal in the first carrier signal, N represents a quantity of subcarrier signals comprised in the first carrier signal, $y_i$ is a decision signal corresponding to the ith subcarrier signal, $f_i$ is a carrier frequency of the ith subcarrier, and $\mu$ is a constant.

24. The apparatus according to any one of claims 21 to 23, further comprising a carrier separation module and a carrier-level processing module, wherein the carrier-level processing module is separately connected to the carrier separation module and the DPD coefficient calculation module;

the carrier separation module is configured to separate the first carrier signal into the plurality of subcarrier signals;
the carrier-level processing module is configured to perform carrier-level processing on one of the plurality of subcarrier signals, wherein a quantity of the carrier-level processing modules is the same as the quantity of the plurality of subcarrier signals; and
the DPD coefficient calculation module is specifically configured to calculate the DPD coefficient based on the plurality of subcarrier signals obtained through the carrier-level processing.

25. The apparatus according to any one of claims 21 to 24, further comprising an analog-to-digital converter ADC, wherein the ADC is separately connected to the antenna and the DPD coefficient calculation module;

the antenna is specifically configured to receive the first carrier signal in an analog signal form;
the ADC is configured to convert the first carrier signal in the analog signal form into the first carrier signal in a digital signal form; and
the DPD coefficient calculation module is specifically configured to calculate the DPD coefficient based on the first carrier signal in the digital signal form.

26. The apparatus according to any one of claims 21 to 25, further comprising a down-converter, wherein the down-converter is separately connected to the antenna and the DPD coefficient calculation module;

the down-converter is configured to perform down-conversion on the first carrier signal; and
the **DPD** coefficient calculation module is specifically configured to calculate the DPD coefficient based on the first carrier signal obtained through the down-conversion.

27. The apparatus according to claim 24, wherein the carrier-level processing module is connected to the DPD coefficient calculation module through an intermediate frequency cable or an optical fiber.

28. The apparatus according to claim 26, wherein the down-converter is connected to the DPD coefficient calculation module through an intermediate frequency cable or an optical fiber.

29. A communication system, wherein the communication system comprises the communication apparatus according to any one of claims 13 to 20 and the communication apparatus according to any one of claims 21 to 28.

30. A computer-readable storage medium, comprising a program or instructions, wherein the method according to any one of claims 1 to 12 is performed when the program or instructions are run on a computer.

Microwave network
system 100

FIG. 1

FIG. 2

Sending device                                                              Receiving device

S301: First carrier signal

S302: Calculate a DPD coefficient based on the first carrier signal

S303: DPD coefficient

S304: Perform, based on the DPD coefficient, digital pre-distortion processing on a multi-carrier signal to be sent, to generate a nonlinear pre-distortion signal, and generate a second carrier signal based on the nonlinear pre-distortion signal

S305: Second carrier signal

FIG. 3

Communication apparatus 300

| | | | | |
|---|---|---|---|---|
| Baseband processing module 505 | Carrier-level processing module 506 | Carrier combination module 404 | DPD module 401 | DAC 607 | Up-converter 708 | Power amplifier 402 | Antenna 403 |

FIG. 4

Communication apparatus 300

| IDU | |
|---|---|

Baseband processing module 505 ...

Intermediate frequency cable or optical fiber

Intermediate frequency cable or optical fiber

...

ODU

Intermediate frequency cable or optical fiber

Carrier-level processing module 506

...

Intermediate frequency cable or optical fiber

Carrier-level processing module 506

Carrier combination module 404

DPD module 401

DAC 607

Up-converter 708

Power amplifier 402

403

FIG. 5

EP 4 607 819 A1

Communication apparatus 300

FIG. 6

Communication apparatus 400

Antenna 1001 → Down converter 1307 → ADC 1206 → Carrier combination module 1104 → ...

Carrier-level processing module 1105 → Timing synchronization module 1408 → Equalizer 1509 → Decider 1610

Carrier-level processing module 1105 → Timing synchronization module 1408 → Equalizer 1509 → Decider 1610

→ DPD coefficient calculation module 1002 → DPD coefficient backhaul module 1003

FIG. 7

Communication apparatus 400

ODU

Down converter 1307

ADC 1206

Carrier separation module 1104

Carrier-level processing module 1105

Carrier-level processing module 1105

IDU

Timing synchronization module 1408

Timing synchronization module 1408

Equalizer 1509

Equalizer 1509

Decider 1610

Decider 1610

DPD coefficient calculation module 1002

DPD coefficient backhaul module 1003

1001

FIG. 8

Communication apparatus 400

ODU

Down converter 1307

IDU

ADC 1206

Carrier separation module 1104

Carrier-level processing module 1105

Timing synchronization module 1408

Equalizer 1509

Decider 1610

DPD coefficient calculation module 1002

DPD coefficient backhaul module 1003

1001

FIG. 9

Communication apparatus 1000

FIG. 10

Communication apparatus 1100

FIG. 11

## INTERNATIONAL SEARCH REPORT

| International application No. |
| --- |
| **PCT/CN2022/131694** |

### A. CLASSIFICATION OF SUBJECT MATTER

H04B10/00(2013.01)i

According to International Patent Classification (IPC) or to both national classification and IPC

### B. FIELDS SEARCHED

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNABS; CNTXT; WOTXT; EPTXT; USTXT; VEN; 3GPP; IEEE: 预失真, 系数, 接收, 收到, 判决, 多, 子, 载波, 聚合, predistortion, pre-distortion, coefficient, receive, reception, decision, judge, multi, sub, carrier, aggregation, CA

### C. DOCUMENTS CONSIDERED TO BE RELEVANT

| Category* | Citation of document, with indication, where appropriate, of the relevant passages | Relevant to claim No. |
| --- | --- | --- |
| X | CN 104580043 A (SOUTH CHINA UNIVERSITY OF TECHNOLOGY) 29 April 2015 (2015-04-29) description, paragraphs 4-18, and figures 1-3 | 1-7, 10-21, 24-30 |
| X | CN 114039673 A (TSINGHUA UNIVERSITY) 11 February 2022 (2022-02-11) description, paragraphs 80-114, and figures 6-8 | 1-7, 10-21, 24-30 |
| X | US 2007153884 A1 (VIASAT INC.) 05 July 2007 (2007-07-05) description, paragraph 30, and figure 2 | 1-7, 10-21, 24-30 |
| A | US 11296735 B1 (QUALCOMM INC.) 05 April 2022 (2022-04-05) entire document | 1-30 |

☐ Further documents are listed in the continuation of Box C.    ☑ See patent family annex.

| | |
| --- | --- |
| *  Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **28 June 2023** | **14 July 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2022/131694**

| Patent document cited in search report | | | Publication date (day/month/year) | Patent family member(s) | | | Publication date (day/month/year) |
|---|---|---|---|---|---|---|---|
| CN | 104580043 | A | 29 April 2015 | CN | 104580043 | B | 02 January 2018 |
| CN | 114039673 | A | 11 February 2022 | None | | | |
| US | 2007153884 | A1 | 05 July 2007 | CA | 2625814 | A1 | 19 April 2007 |
| | | | | WO | 2007044957 | A2 | 19 April 2007 |
| | | | | WO | 2007044957 | A3 | 22 November 2007 |
| | | | | EP | 1935128 | A2 | 25 June 2008 |
| | | | | EP | 1935128 | A4 | 11 December 2013 |
| | | | | US | 8385391 | B2 | 26 February 2013 |
| | | | | IL | 190782 | A0 | 03 November 2008 |
| US | 11296735 | B1 | 05 April 2022 | None | | | |

Form PCT/ISA/210 (patent family annex) (July 2022)